# EUROPEAN PATENT APPLICATION

(11) **EP 1 148 732 A2**
(43) Date of publication of application: **24.10.2001**
(21) Application number: 01303552.2
(22) Date of filing: 19.04.2001
(51) Int. Cl.: H04N 7/26

(54) **Encoder with image change detecting**

(30) Priority: 21.04.2000 JP 2000121637
(71) Applicant: Pioneer Corporation, Meguro-ku, Tokyo (JP)
(72) Inventor: Kimura, Tomohiro, c/o Pioneer Corporation, Tokorozawa-shi, Saitama-ken (JP)
(74) Representative: Haley, Stephen

(57) **Abstract**

An image change detecting apparatus comprises a differentiating device and a detecting device. The differentiating device differentiates twice a value of an image signal corresponding to a plurality of line-pixels on a single predetermined line, of pixels forming a single static image. The detecting device detects a part sequentially changing in concentration in a partial image including the plurality of line-pixels. The partial image is a part of the static image, when the twice differentiated result is zero.

## Description

### 1. Field of the Invention

The present invention relates to an image change detecting apparatus, an image change detecting method, an image coding apparatus, and an information recording medium in which an image change detecting program is recorded in a computer readable way, and more particularly it relates to an image change detecting apparatus and an image change detecting method for checking whether a static image included in moving image information contains a partial image sequentially changing in concentration, an image coding apparatus including the above detecting apparatus and method, and an information recording medium in which the image change detecting program is recorded in a computer readable way.

### 2. Description of the Related Art

Generally, when coding moving image information comprising a plurality of static images (including compression-coding), it is necessary to do the optimum control of a parameter in coding, depending on the quality of the moving picture image information.

In some cases, the static image includes a gradation part sequentially changing in concentration. The "concentration" includes the concentration of chromatic color and the concentration of achromatic color. The same definition will be given in the following description. The "gradation" includes the case where the concentration of a single color sequentially changes and the case where one color is gradually changing toward the other, in the boundary of two different colors. The same definition will be given in the following description.

Accordingly, as for a static image including the gradation part, it is necessary to detect the position of the gradation part in the static image and set the parameter corresponding to the position (especially a coding step corresponding to the position) suitably to the gradation part. When the static image is coded without such setting, there occurs such a disadvantage that an unnecessary line may appear at a changing point of the tone in the gradation part, in decoding the moving image information including the coded static image to reproduce the same.

As the conventional method of detecting the gradation part within a static image in the moving image information coding process, the gradation part is detected based on a change of an image signal (especially a luminance signal) corresponding to the pixels of the static image aligned in two directions (generally, the pixels aligned in the horizontal direction and the pixels aligned in the vertical direction).

The above conventional detecting method of the gradation part, however, is defective in that the detection processing itself becomes complicated because of using an image signal corresponding to the pixels aligning in the two directions and that a detecting apparatus becomes expensive in order to perform the complicated detection processing in a short period of time.

In consideration of the above problem, an object of the present invention is to provide an image change detecting apparatus and an image change detecting method, an image coding apparatus including the above detecting apparatus and method, and an information recording medium with an image change detecting program recorded therein in a computer readable way, in which a detecting apparatus for detecting a gradation part can be simplified by detecting the gradation part within the static image in simple processing, thereby saving the cost.

Since a partial image sequentially changing in concentration is detected by using an image signal corresponding to only the line-pixels on one line, the present invention can detect the partial image by easy processing.

Accordingly, it can simplify the image change detecting apparatus and cut down the cost.

Since the partial image sequentially changing in concentration is detected by using at least one of a chrominance signal or a luminance signal, the present invention can detect the partial image accurately.

Since the partial image sequentially changing in concentration is detected based on an image signal corresponding to a plurality of line-pixels of a static image either in the horizontal direction or the vertical direction, it can detect the partial image accurately by easy processing.

In the coding of the MPEG method, it is possible to easily detect a partial image sequentially changing in concentration so as to perform the suitable coding on this.

It is possible to check the presence of a sequential change in concentration in every macro block in the MPEG method.

It is possible to set a coding parameter suitable to the partial image sequentially changing in concentration so as to perform the coding.

Since the partial image sequentially changing in concentration is detected by using an image signal corresponding to only the line-pixels on one line, it can detect the partial image by easy processing.

Since the present invention works a computer to detect the partial image sequentially changing in concentration by using an image signal corresponding to only the line-pixels on one line, it can detect the partial image by easy processing.

Accordingly, the present invention can simplify the image change detecting apparatus including the computer and cut down the cost.

### In the Drawings;

Figs. 1(a) and Fig. 1(b) show an example of the state of including a gradation part and a change of a luminance signal; Fig. 1(a) is a view showing the example; and Fig. 1(b) is a graph showing the change of a luminance signal of line-pixels on one horizontal line including the gradation part.
Fig. 2 is a block diagram showing the schematic structure of a coding apparatus in accordance with an embodiment of the present invention.
Fig. 3 is a block diagram showing the schematic structure of a feature extracting circuit in accordance with the embodiment.
Fig. 4 is a block diagram showing the schematic structure of a coding circuit in accordance with the embodiment.
Fig. 5 is a flow chart showing a coding processing in accordance with the embodiment.
Fig. 6 is a timing chart showing the coding processing in accordance with the embodiment.

Preferred embodiments of the present invention will be described based on the drawings. In the embodiment described later, the description will be made when adopting the present invention to the case of detecting a gradation part within a static image included in moving image information to be compressed and coded by the MPEG method, in a coding apparatus for performing the MPEG coding.

Here, the MPEG method is a kind of coding processing using, what is called, a Discrete Cosine Transform (DCT) method, which is regarded as the international standard of an efficient coding method (compression-coding) of image information (including moving image information and static image information) in these days.

In the compression coding of an image by the MPEG method, an original image to be compression-coded is divided into blocks of 16 pixels in row and 16 pixels in line referred to as a macro block as a pixel block, and the processing including motion compensation, the DCT, and quantization, or variable length coding is performed by the unit of this macro block.

Especially in coding the moving image information, when optimizing the motion compensation, the DCT, and the quantization, the MPEG method is standardized to detect the characteristic of an image including a gradation part by the macro block in the moving image information to be coded, and change the parameters of the quantization scale or the moving vector for coding the image after optimization of the detected characteristic.

### (1) Principle of the Invention

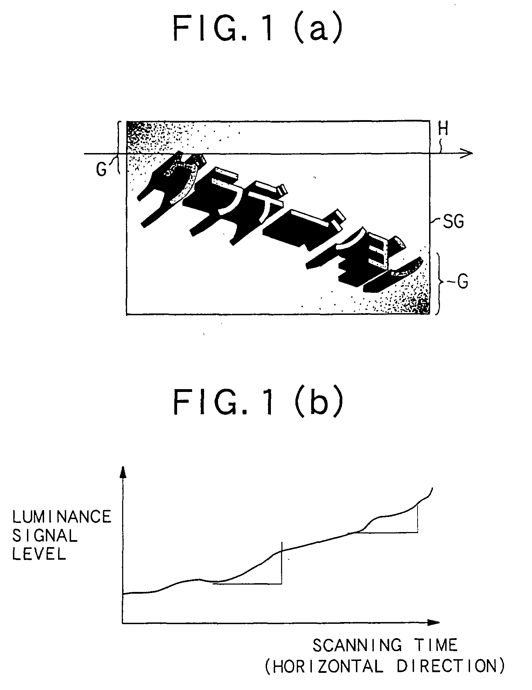

At first, the principle of the present invention will be described by using Fig. 1, before describing the embodiments of the present invention concretely.

Fig. 1(a) is a view showing an example of the state including a gradation part within one static image in the moving image information to be coded by the MPEG method, and Fig. 1(b) is a graph showing a change of a luminance signal corresponding to a plurality of pixels (a plurality of pixels forming the static image) on one horizontal line including the gradation part. Incidentally, Fig. 1(a) includes the term "GRADATION" in Japanese language.

Generally, when one static image SG includes a gradation part G as shown in Fig. 1(a), considering one horizontal line H (namely, horizontal scanning line) passing through the gradation part G, the level of the luminance signal corresponding to each pixel aligned on the horizontal line H changes gradually and uniformly within the gradation part G as shown in Fig. 1(b).

Accordingly, if the level of the luminance signal corresponding to the line-pixels on the horizontal line H is differentiated twice between every adjacent line-pixels, the result is considered to be approximate to zero.

In the present invention, one horizontal line H is established on any position within the static image SG, and the level of the luminance signal corresponding to each pixel aligned on the horizontal line H is differentiated twice between every adjacent line-pixels. When the result becomes approximate to zero, it is judged that the gradation part G is generated there at a position corresponding to thus differentiated portion on the horizontal line H. A coding parameter corresponding to the static image SG is optimized correspondingly to the case of including the gradation part G.

### (II) Embodiment

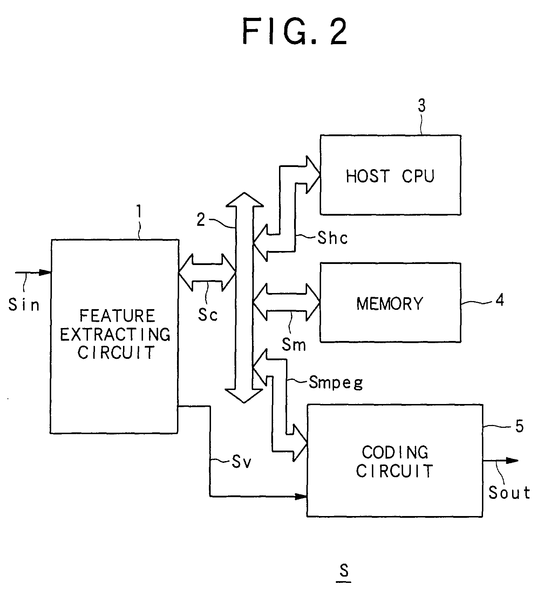

This time, an embodiment of the present invention will be described concretely by using Figs. 2 to 6.

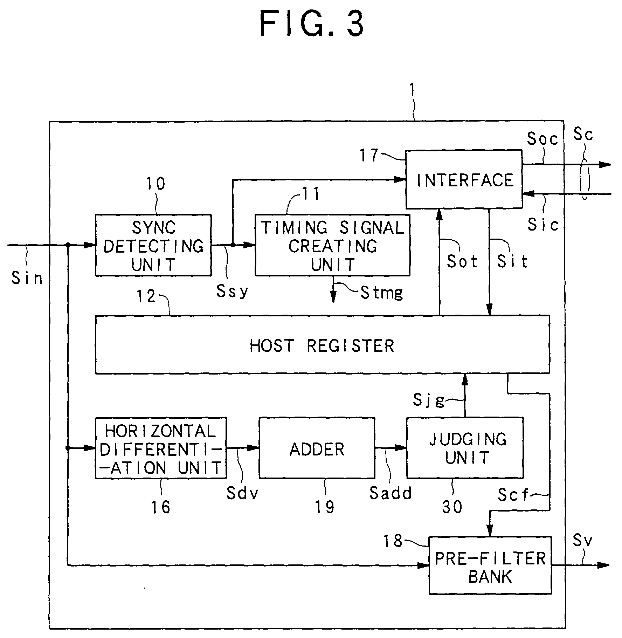

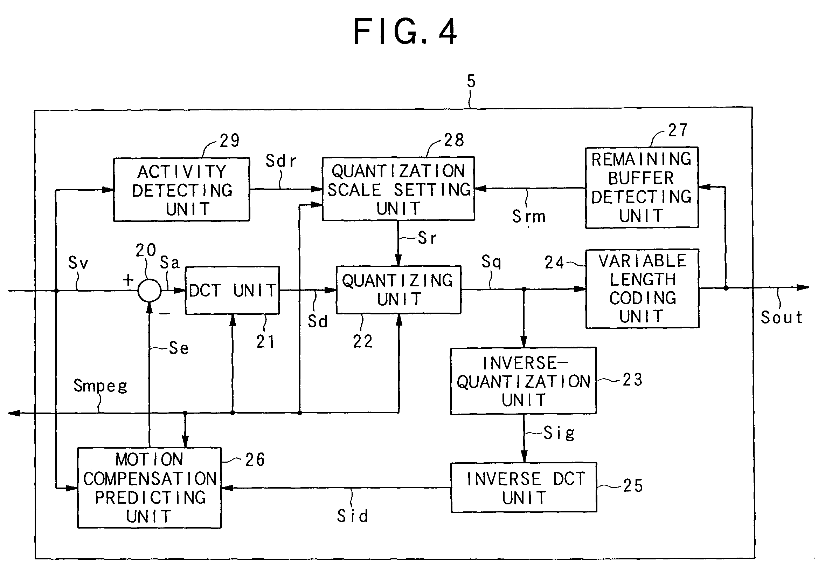

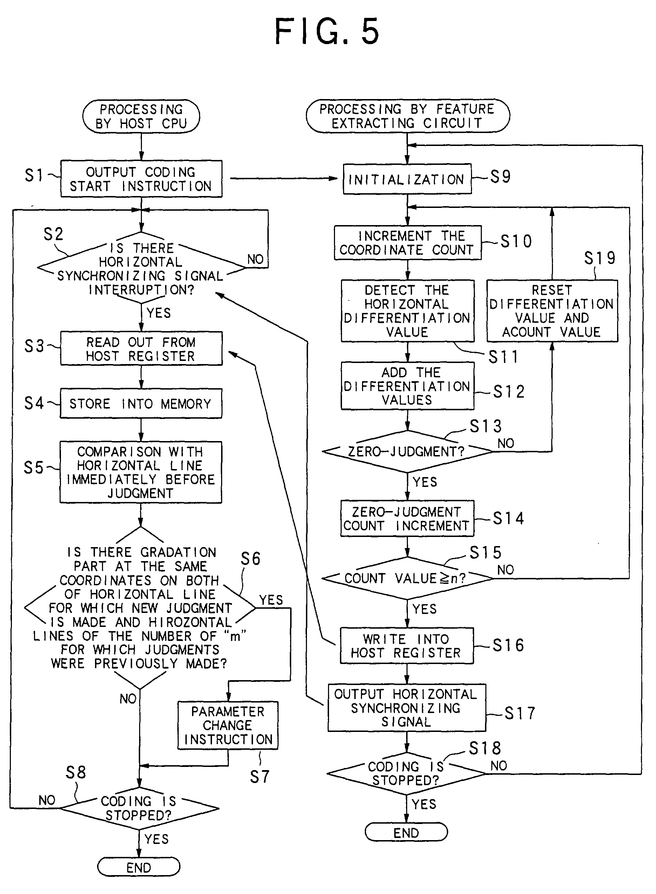

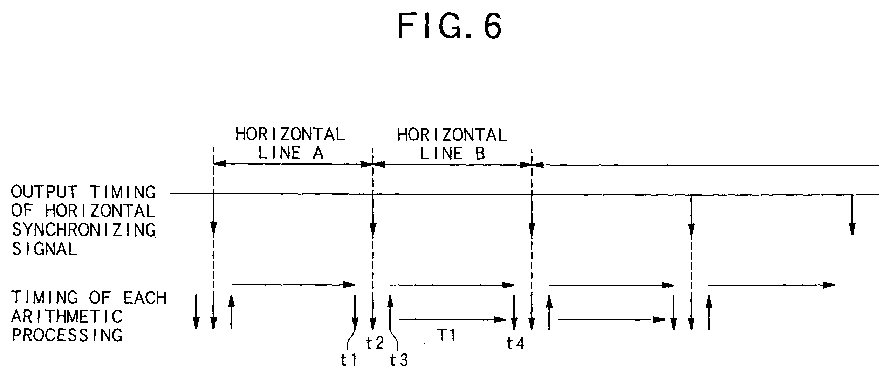

Fig. 2 is a block diagram showing the schematic structure of a coding apparatus in accordance with the embodiment; Fig. 3 is s block diagram showing the schematic structure of a feature extracting circuit in accordance with the embodiment; Fig. 4 is a block diagram showing the schematic structure of a coding circuit in accordance with the embodiment; Fig. 5 is a flow chart showing the coding processing in accordance with the embodiment; and Fig. 6 is a timing chart showing the coding processing in accordance with the embodiment.

The whole structure and operation of a coding apparatus in accordance with the embodiment will be described by using Fig. 2.

As illustrated in Fig. 2, the coding apparatus S of the embodiment comprises a feature extracting circuit 1, a bus 2, a host CPU 3 as a detecting device, a memory 4, and a coding circuit 5 as a coding device.

Now, the schematic operation will be described.

While receiving control information Sc from the host CPU 3 through the bus 2, in every frame image (namely, the static image SG) included in moving image information Sin to be coded which is entered from the outside, the feature extracting circuit 1 detects the result of twice differentiation (including judgment result described later) of a luminance signal corresponding to each pixel forming a frame image and supplies it to the host CPU 3 through the bus 2 as the control signal Sc as described later.

Parallel to this, the feature extracting circuit 1 performs the optimum processing, for example, filtering processing, for coding in the coding circuit 5, on the moving image information Sin so as to create an image filter signal Sv and supply it to the coding circuit 5.

Thus, while receiving a control signal Smpeg from the host CPU 3 through the bus 2, the coding circuit 5 codes the moving image included in the image filter signal Sv and supplies it as an output signal Sout to the outside.

The supplied output signal Sout is thereafter to be provided for modulation processing, for example, for broadcasting or recording into an optical disc.

While receiving a control signal Shc from the other components through the bus 2, the host CPU 3 controls the above-mentioned whole coding processing.

At this time, the result of twice differentiation in each frame image included in the control signal Sc from the feature extracting circuit 1 is supplied to the host CPU 3 as the control signal Shc. Based on this, the host CPU 3 detects the occurrence of the gradation part in each frame image, and based on the detected result, the host CPU 3 changes the coding parameter for the coding circuit 5, the pass band of the filtering processing for the feature extracting circuit 1, and the like.

While receiving a memory signal Sm from the memory 4 through the bus 2, if necessary, the CPU 3 temporarily stores the necessary information into the memory 4.

The detailed structure and operation of the feature extracting circuit 1 will be described by using Fig. 3.

As illustrated in Fig. 3, the feature extracting circuit 1 in accordance with the embodiment comprises a sync detecting unit 10, a timing signal creating unit 11, a host register 12, a horizontal differentiation unit 16 as a differentiating device, an interface 17, a pre-filter bank 18, an adder 19, and a judging unit 30.

Now, the operation will be described.

The moving image information Sin entered into the feature extracting circuit 1 is respectively supplied to the sync detecting unit 10, the horizontal differentiation unit 16, and the pre-filter bank 18.

The sync detecting unit 10 respectively detects a horizontal synchronizing signal and a vertical synchronizing signal in the moving image information Sin, and supplies them to the host CPU 3 through the interface 17 and the bus 2 as well as supplies them to the timing signal creating unit 11 at the timing described later as a frame synchronizing signal Ssy.

The timing signal creating unit 11 creates a timing signal Stmg that can be a reference of the operation of each component forming the feature extracting circuit 1 based on the frame synchronizing signal Ssy, and supplies it to the respective components.

The horizontal differentiation unit 16 receiving the moving image information Sin sets one horizontal line H within one frame image of the received moving image information Sin and differentiates twice the luminance signal aligned on the horizontal line H respectively between adjacent line-pixels. It supplies the respective results to the adder 19 as a differentiation signal Sdv.

The adder 19 adds the respective supplied differentiation signals Sdv as for the line-pixels on the horizontal line H set in the above, so as to create an addition signal Sadd showing the addition result and supply it to the judging unit 30.

The judging unit 30 judges whether or not the result of the addition signal Sadd is approximate to zero and how many pixels approximate to zero are continuous, and supplies a judgment signal Sjg showing the judgment result to the host register 12 at the timing described later.

The host register 12 temporarily stores the judgment result included in the judgment signal Sjg and supplies it to the interface 17 as a register output signal Sot at the timing described later.

The interface 17 performs predetermined interface processing on the register output signal Sot and supplies it to the host CPU 3 through the bus 2 as a register output signal Soc forming the control signal Sc.

While, a register input signal Sic including a band control signal Scf described later for controlling the pass band of the pre-filter bank 18, which is supplied as the control signal Sc from the host CPU 3, is subjected to the interface processing by the interface 17. It is temporarily stored in the host register 12 as a register input signal Sit. The band control signal Scf is supplied from the host register 12 to the pre-filter bank 18 at the timing described later, and used for controlling the pass band of the pre-filter bank 18.

The pre-filter bank 18 passes the information corresponding to the pass band of the moving image information Sin so as to create the image filter signal Sv and supply it to the coding circuit 5.

The detailed structure and operation of the coding circuit 5 will be described by using Fig. 4.

As illustrated in Fig. 4, the coding circuit 5 comprises an adder 20, a DCT unit 21, a quantization unit 22, an inverse-quantization unit 23, a variable length coding unit 24, an inverse DCT unit 25, a motion compensation predicting unit 26, a remaining buffer detecting unit 27, a quantization scale setting unit 28, and an activity detecting unit 29.

Now, the operation will be described.

The adder 20 receiving the image filter signal Sv subtracts a compensation signal Se supplied from the motion compensation predicting unit 26, from the image filter signal Sv and supplies it to the DCT unit 21 as a subtraction signal Sa.

The DCT unit 21 performs the DCT processing for compression of the information amount on the subtraction signal Sa by the known technique and supplies it to the quantization unit 22 as a conversion signal Sd.

The quantization unit 22 quantizes the conversion signal Sd so as to conform to a bit rate shown by a rate signal Sr described later, so as to create a quantization signal Sq and supply it to the variable length coding unit 24 and the inverse-quantization unit 23.

The inverse-quantization unit 23 performs the inverse-quantization processing on the quantization signal Sq, so as to create an inverse-quantization signal Sig and supply it to the inverse DCT unit 25.

The inverse DCT unit 25 performs the inverse DCT (Inverse Discrete Cosine Transform) processing on the inverse-quantization signal Sig by the conventional technique and supplies it to the motion compensation predicting unit 26 as an inverse conversion signal Sid.

The motion compensation predicting unit 10 performs the motion detecting processing of the MPEG method on the above-mentioned image filter signal Sv from the feature extracting circuit 1. Based on the resultant motion vector and inverse conversion signal Sid, it performs the motion compensation processing using, what is called, between-frames prediction of the MPEG method, so as to create the compensation signal Se for compression of the information amount and supply it to the adder 20.

The variable length coding unit 24 performs the variable length coding processing on the quantization signal Sq and supplies the output signal Sout that is a signal obtained by compression-coding the original image filter signal Sv by the MPEG method to the remaining buffer detecting unit 27 and the outside.

The remaining buffer detecting unit 27 predicts the remaining amount of the buffer memory used when reproducing the moving image information compression-coded included in the output signal Sout, based on the output signal Sout. It creates a remaining amount signal Srm and supplies it to the quantization scale setting unit 28.

The activity detecting unit 29 receiving the image filter signal Sv detects the average value (namely, the average direct current level within frames) of the luminance of each pixel included in one frame image, over the whole of the same frame, in every frame image within the image filter signal Sv. By detecting the difference between the above average value and the luminance of each pixel included in the same frame, with the detected average value and the original image filter signal Sv, the unit 29 detects, what is called, a dispersion value within frame in every frame image and supplies it as a dispersion signal Sdr to the quantization scale setting unit 28.

The dispersion value within frame means the difference between the luminance of each pixel included in one frame image and the average value of the luminance within one frame image as mentioned above and in short, it means the value showing how dispersed is the luminance of each pixel within one frame image. When the dispersion value within frame is large, it means a frame image of great variety of luminance and when the dispersion value within frame is low, it means a monotonous frame image lacking in variety of luminance.

The quantization scale setting unit 28 creates the rate signal Sr for controlling the bit rate in the quantization processing so that the information amount in the output signal Sout as the result of the quantization processing in the quantization unit 22 can be the information amount which can prevent from overflow and underflow of the buffer memory, based on the dispersion signal Sdr and the remaining amount signal Srm, and supplies it to the quantization unit 22.

The above dispersion value within the frame included in the dispersion signal Sdr is used for creating a rate signal Sr as activity.

In the operation of the above-mentioned coding circuit 5, the DCT unit 21, the quantization unit 22, the variable length coding unit 24, and the motion compensation predicting unit 26 optimize the coding parameters to do the compression-coding, while respectively receiving the control signal Smpeg from the host CPU 3 through the bus 2.

The coding processing including the detecting processing of the gradation part G in accordance with the present invention will be described by using Figs. 5 and 6.

Fig. 5 shows the processing of the feature extracting circuit 1 and the processing of the host CPU 3 in parallel to each other in the coding processing.

As illustrated in Fig. 5, in the coding processing of the embodiment, at first, a coding start instruction to the effect that the coding processing starts is supplied from the host CPU 3 to each component through the bus 2 (Step S1). Upon receipt of it, the feature extracting circuit 1 initializes the horizontal differentiation unit 16, the adder 19, the judging unit 30, and the host register 12 (Step S9).

The judging unit 30 sets one horizontal line H (refer to Fig. 1) at any position within a static image forming one frame in the moving image information Sin entered after initialization, and increments a coordinate counter, not illustrated, showing the coordinates of a pixel in the horizontal direction (referred to as horizontal coordinates) on the set horizontal line H, by "1" (Step S10).

The luminance signal of the pixel positioned at the incremented horizontal coordinates is twice differentiated in the horizontal differentiation unit 16 (Step S11), and the result is added to the twice differentiation value of the luminance signal of the pixel positioned at the horizontal coordinates before increment, in the adder 19 (Step S12). Whether the addition result is approximate to zero or not is judged in the judging unit 30 (Step S13).

When it is not approximate to zero (Step S13; NO), it is judged that the pixel at the position of the current horizontal coordinates is not included in the gradation part G within the frame image of the current subject, and the added differentiation value and the count value in a zero-judging counter described later are reset (Step S19). Thereafter, this step is returned to Step S10 to confirm the value of the twice differentiation as for the pixel adjacent to the current pixel in the horizontal direction.

When the addition result is approximate to zero in the judgment of Step S13 (Step S13; YES), the position of the pixel judged to be approximate to zero is stored in the judging unit 30. Further, the count value of the zero-judging counter (not shown) within the judging unit 30 showing the number of the judged line-pixels is incremented (Step S14).

Thereafter, whether the value of the zero-judging counter is a predetermined threshold "n" and more is judged by the judging unit 30 (Step S15).

The threshold "n" is to be experientially set in advance; if there continue "n" pieces of the pixels whose twice differentiation values of the luminance signal are judged to be approximate to zero, it can be judged that the gradation part G is within the range of the continuous pixels.

Considering that the macro block is wide enough to include 16 pixels in row and 16 pixels in line, for example, "16" is used as the threshold "n".

When the value of the zero-judging counter is less than the threshold "n" in the judgment of Step S15 (Step S15; NO), this step is returned to Step S10 to confirm the value of the twice differentiation value as for the pixel, in the horizontal direction, adjacent to the current pixel to be judged.

While, when the value is the threshold "n" and more in the judgment of Step S15 (Step S15; YES), the position (horizontal coordinates) of the head pixel, of the pixels whose twice differentiation values are judged to be approximate to zero, and the number of the continuous pixels judged to be approximate to zero are written into the host register 12 as a judgment signal Sjg (Step S16).

The processing of Step S16 is to be performed on the line-pixels aligned on the horizontal line A as a subject at the timing t1 in Fig. 6.

When the judgment result has been written into the host register 12, the frame synchronizing signal Ssy (horizontal synchronizing signal) is supplied to the host CPU 3 through the bus 2 (Step S17), the signal Ssy showing the input timing of the horizontal line (the horizontal line B in Fig. 6) corresponding to the next to the horizontal line A having the zero-approximation judgment performed thereon.

Whether or not the control signal Sc to the effect that the coding is stopped has been received from the host CPU 3 is confirmed (Step S18), when it has been received (Step S18; YES), the feature extracting processing is finished. When it has not been received, this step is returned to Step S9 to perform the processing of Step S9 to Step S17 and Step S19 on the line-pixels on the next horizontal line B.

The host CPU 3 always monitors whether or not the horizontal synchronizing signal is supplied from the feature extracting circuit 1 as the frame synchronizing signal Ssy, after supplying the coding start instruction in Step S1 (Step S2). When it is not supplied (Step S2; NO), it waits until it is supplied. On the contrary, when it is supplied (Step S2; YES), the judgment result stored in the host register 12 is read out at the timing t3 shown in Fig. 6 (Step S3), and the content is stored in the memory 4 as the memory signal Sm (Step S4).

The judgment result read out and detected on the horizontal line just before the horizontal line A in Fig. 6 has been stored in the memory 4.

The judgment result read out newly is compared with the judgment result stored just before (the judgment result on the horizontal line just before) (Step S5).

Based on the compared result, it is judged whether the twice differentiation value has been judged to be approximate to zero from the same horizontal coordinates at the horizontal lines for the number of predetermined "m" line ahead and the horizontal line having the judgment result newly read out (the horizontal line A of Fig. 6). In short, whether it is detected as the gradation part G is judged (Step S6).

The processing of Step S4 to Step S6 is performed in the period T1 shown in Fig. 6.

The number of lines "m" as the above judgment unit is to be set with the macro block as a reference in the coding of the MPEG method, and considering that the macro block is wide enough to include 16 pixels in row and 16 pixels in line, for example, "8", "16", or "32" is used as the value of "m".

As the result of the judgment of Step S6, when the judgment result of zero-approximation has been obtained from the same horizontal coordinates, as for the horizontal lines for the number of "m" and the new horizontal line (Step S6; YES), the coding circuit 5 is controlled by the control signal Smpeg (Step S7) so as to optimize the coding parameter, from the judgment that the gradation part G occurs such as requiring a change of the coding parameter for the coding processing in the coding circuit 5, from the horizontal coordinates, and this step is moved to Step S8.

This coding parameter changing processing is performed at the timing t4 in Fig. 6. At this timing t4, the processing of the above Step S16 to process the horizontal line B in Fig. 6 is also performed at the same time.

As the result of the judgment of Step S6, when no judgment result of zero-approximation has been obtained from the same horizontal coordinates (Step S6; NO), the above change is not performed, from the judgment that the gradation part G never occurs such as requiring a change of the coding parameter. This time, whether or not the coding is stopped is judged because the operation to stop coding is performed by an operation unit not illustrated (Step S8). When the coding should be continued (Step S8; NO), this step is returned to Step S2 so as to perform the above processing on the static image next entered. When the coding should be stopped (Step S8; YES), the control signal Sc to that effect is supplied to the feature extracting circuit 1, so as to finish a series of coding processing.

As mentioned above, according to the gradation part detecting processing in the coding processing of the embodiment, since the gradation part G is detected by using the luminance signal corresponding to only the line-pixels on one horizontal line H, the gradation part G can be detected in easier processing than in the case of detecting it by using the luminance signal corresponding to a plurality of line-pixels aligned in the two directions.

Since the gradation part G is detected by using the luminance signal, the present invention can detect the gradation part G accurately.

Further, since the gradation part G is detect based on the luminance signal corresponding to a plurality of line-pixels only in the horizontal direction of a static image, it can detect the gradation part G accurately and easily.

Since the static image is one part of the moving image information Sin to be coded by the MPEG method, it can detect easily the gradation part G and perform the coding suitable to this in the MPEG coding.

Since the presence of the gradation part G is judged with the macro block in the MPEG method as a reference, it can detect the presence of the gradation part G by the macro block.

### (III) Modification

Now, a modification in accordance with the present invention will be described.

In the above-mentioned embodiment, the presence of the gradation part G is judged by setting one horizontal line H within a frame image. However, the presence of the gradation part G may be judged, besides, by setting one vertical line within the frame image in the same way.

In the above-mentioned embodiment, the presence of the gradation part G is judged by twice differentiating the value of a luminance signal corresponding to each line-pixel. However, the gradation part G may be detected in the same way, besides, by twice differentiating the value of, what is called, a chrominance signal, or by twice differentiating both a luminance signal and a chrominance signal.

Further, a program corresponding to the flow chart shown in Fig. 5 may be recorded in an information recording medium of a flexible disc, a hard disc or the like, and this may be read out and executed by a personal computer or the like. Therefore, the personal computer may be used as the host CPU 3.

## Claims

1. An image change detecting apparatus comprising:
a differentiating device (16) for twice differentiating a value of an image signal corresponding to a plurality of line-pixels on a single predetermined line (H), of pixels forming a single static image (SG); and
a detecting device (3) for detecting a part sequentially changing in concentration in a partial image including the plurality of line-pixels, the partial image being a part of the static image (SG), when the twice differentiated result is zero.

2. The image change detecting apparatus according to Claim 1, wherein the image signal is at least one of a chrominance signal and a luminance signal corresponding to the line-pixels.

3. The image change detecting apparatus according to Claim 1 or 2, wherein the line (H) is in parallel to any one of horizontal direction and vertical direction.

4. The image change detecting apparatus according to any one of Claims 1 to 3, wherein the static image (SG) is a part of moving image information to be coded by an MPEG (Moving Picture Experts Group) system.

5. The image change detecting apparatus according to Claim 4, wherein the partial image is a macro block in the MPEG system.

6. An image coding apparatus comprising:
(i) an image change detecting apparatus comprising:
a differentiating device (16) for twice differentiating a value of an image signal corresponding to a plurality of line-pixels on a single predetermined line (H), of pixels forming a single static image; and
a detecting device (3) for detecting a part sequentially changing in concentration in a partial image including the plurality of line-pixels, the partial image being a part of the static image (SG), when the twice differentiated result is zero; and
(ii) a coding device (5) for, when detecting the partial image sequentially changing in concentration, changing coding parameter in coding of the detected partial image to code the partial image.

7. The image coding apparatus according to Claim 6, wherein the image signal is at least one of a chrominance signal and a luminance signal corresponding to the line-pixels.

8. The image coding apparatus according to Claim 6, wherein the line is in parallel to any one of horizontal direction and vertical direction.

9. The image coding apparatus according to Claim 6, wherein the static image (SG) is a part of moving image information to be coded by an MPEG (Moving Picture Experts Group) system.

10. The image coding apparatus according to Claim 6, wherein the partial image is a macro block in the MPEG system.

11. An image change detecting method, comprising:
a differentiating process for twice differentiating a value of an image signal corresponding to a plurality of line-pixels on a single predetermined line (H), of pixels forming one static image (SG); and
a detecting process for detecting a part sequentially changing in concentration in a partial image including the plurality of line-pixels, the partial image being a part of the static image (SG), when the twice differentiated result is zero.

12. An information recording medium with an image change detecting program recorded readable by a computer, which is included in an image change detecting apparatus, wherein the program causes the computer to function as:
a differentiating device (16) for twice differentiating a value of an image signal corresponding to a plurality of line-pixels on a single predetermined line, of pixels forming one static image (SG); and
a detecting device (3) for detecting a part sequentially changing in concentration in a partial image including the plurality of line-pixels, the partial image being a part of the static image (SG), when the twice differentiated result is zero.
